# EUROPEAN PATENT APPLICATION

(11) **EP 4 814 856 A1**
(43) Date of publication of application: **30.09.2026**
(21) Application number: 25886241.6
(22) Date of filing: 10.10.2025
(51) Int. Cl.: G06Q 50/40, G06Q 10/04, B60L 3/00, B60R 16/023

(54) **SYSTEM AND METHOD FOR PROVIDING FULL INSPECTION**

(30) Priority: 04.11.2024 KR 20240154357
(71) Applicant: LG Energy Solution, Ltd., Seoul 07335 (KR)
(72) Inventor: KWAK, Yeonmi, Daejeon 34122 (KR)
(74) Representative: Goddar, Heinz J.
(86) International application number: PCT/KR2025/015973
(87) International publication number: WO 2026/095415

(57) **Abstract**

A system and method for providing a total inspection may be provided. A method for providing a total inspection by a total inspection server connected via a network to a first vehicle equipped with a first battery pack includes: receiving, from the first vehicle, a fault code indicating an abnormal state of the first battery pack; determining whether the fault code corresponds to a total inspection code; when the fault code corresponds to the total inspection code, determining battery packs having the same production information as the first battery pack as targets for total inspection; searching for vehicles equipped with the battery packs corresponding to the targets for total inspection; and notifying the searched vehicles and the first vehicle that they are targets for total inspection.

## Description

### [Technical Field]

### CROSS-REFERENCE TO RELATED APPLICATION

This application claims priority to and the benefit of Korean Patent Application No. 10-2024-0154357 filed with the Korean Intellectual Property Office on November 4, 2024, the entire contents of which are incorporated herein by reference.

The present disclosure relates to a system and method for providing a total inspection.

### [Background Art]

An electric vehicle may be driven using an electric motor. The electric vehicle uses a battery system, which is a high-voltage power source, for driving the electric motor.

The battery system includes a Battery Management System (BMS) for monitoring a plurality of battery cells.

The BMS may perform appropriate actions, such as turning off a relay between a plurality of battery cells and a load upon detecting an abnormal battery signal. However, when the detected abnormal battery signal indicates an abnormal state that requires a total inspection of the battery system, the total inspection must be performed as quickly as possible for the driver's safety. However, a rapid total inspection of battery systems may be difficult due to the limitations of information associated with each vehicle.

### [Disclosure]

### [Technical Problem]

Some embodiments of the present disclosure may provide a system and method for providing a total inspection that may provide a rapid total inspection service for battery systems.

### [Technical Solution]

According to one embodiment, a method for providing a total inspection by a total inspection server connected via a network to a first vehicle equipped with a first battery pack may be provided. The method for providing a total inspection may include receiving, from the first vehicle, a fault code indicating an abnormal state of the first battery pack; determining whether the fault code corresponds to a total inspection code; when the fault code corresponds to the total inspection code, determining battery packs having the same production information as the first battery pack as targets for total inspection; searching for vehicles equipped with the battery packs corresponding to the targets for total inspection; and notifying the searched vehicles and the first vehicle that they are targets for total inspection.

The searching for vehicles may include searching for information of vehicles equipped with the battery packs corresponding to the targets for total inspection, based on production information of the battery packs and information of the vehicles in which the battery packs are equipped, the production information and the information of the vehicles being stored in a storage device.

The production information may include manufacturing environment information or lot information, and the manufacturing environment information may include at least one of a manufacturing line, a manufacturing period, and materials used in manufacturing.

The method for providing a total inspection may further include transmitting location information of adjacent service centers to each of the searched vehicles and the first vehicle, based on location information of each of the searched vehicles and the first vehicle.

The method for providing a total inspection may further include providing differentiated services to the searched vehicles and the first vehicle based on risk level information set for the total inspection code. The risk level information may include a risk level.

The providing may include: when the risk level is a first level, providing a vehicle maintenance reservation service to the searched vehicles and the first vehicle; and when the risk level is a second level higher than the first level, providing information of service centers capable of emergency maintenance to the searched vehicles and the first vehicle.

According to another embodiment, a system for providing a total inspection may be provided. The system for providing a total inspection may include a communication circuit connected via a network to a first vehicle equipped with a first battery pack, and configured to receive a fault code indicating an abnormal state of the first battery pack from the first vehicle; a storage device configured to store production information of battery packs, information of vehicles in which the battery packs are equipped, and total inspection code information; and a controller configured to determine whether the fault code corresponds to a total inspection code based on the total inspection code information, and when the fault code corresponds to the total inspection code, configured to notify vehicles equipped with battery packs having the same production information as the first battery pack that they are targets for total inspection.

The controller may be configured to search among the battery packs for battery packs having the same production information as the first battery pack based on the production information of the battery packs and the information of the vehicles in which the battery packs are equipped, and to search for information of vehicles equipped with the searched battery packs.

The production information may include manufacturing environment information or lot information, and the manufacturing environment information may include at least one of a manufacturing line, a manufacturing period, and materials used in manufacturing.

The controller may be configured to provide location information of service centers to each of the searched vehicles and the first vehicle through the communication module, based on location information of each of the searched vehicles and the first vehicle.

The controller may be configured to provide differentiated services to the searched vehicles and the first vehicle based on risk level information set for the total inspection code. The risk level information may include a risk level.

The controller may be configured provide a vehicle maintenance reservation service to the searched vehicles and the first vehicle when the risk level is a first level, and provides information of service centers capable of emergency maintenance to the searched vehicles and the first vehicle when the risk level is a second level higher than the first level.

### [Advantageous Effects]

According to at least one of the embodiments, target vehicles for total inspection may be quickly looked up based on a fault code that requires a total inspection of a battery pack, and by urging the drivers of the target vehicles for total inspection to have battery packs inspected, emergency situations or accidents may be prevented in advance.

### [Description of the Drawings]

FIG. 1 is a diagram illustrating an example of an electric vehicle according to an embodiment.
FIG. 2 is a diagram illustrating an example of a system for providing a total inspection according to an embodiment.
FIG. 3 is a diagram illustrating the total inspection server shown in FIG. 2.
FIG. 4 is a flowchart illustrating a method for providing a total inspection by the total inspection server shown in FIG. 3.
FIG. 5 is a diagram illustrating a system for providing a total inspection according to another embodiment.

### [Mode for Invention]

Hereinafter, embodiments will be described in detail with reference to the accompanying drawings so that those skilled in the art to which the present invention pertains can easily implement them. However, they may be implemented in various different forms and are not limited to the embodiments described herein. The drawings and description are to be regarded as illustrative in nature and not restrictive. Like reference numerals designate like elements throughout the specification.

In the flowchart described with reference to the drawings in this specification, the order of operations may be changed, several operations may be merged, some operations may be divided, and specific operations may not be performed.

Throughout the specification and claims, if a part is referred to "include" a certain element, it may mean that it may further include other elements rather than exclude other elements, unless specifically indicated otherwise.

In addition, expressions described in the singular may be interpreted in the singular or plural unless explicit expressions such as "one" or "single" are used.

In addition, terms including an ordinal number, such as first, second, etc., may be used to describe various elements, but the elements are not limited by the terms. The above terms are used only for the purpose of distinguishing one element from another element. For example, without departing from the scope of the present disclosure, a first element may be referred to as a second element, and similarly, a second element may be referred to as a first element.

Furthermore, if a component is referred to as being "connected" with another component, it includes not only the case where two components are "directly connected" but also the case where two components are "indirectly or non-contactedly connected" with another component interposed therebetween, or the case where two components are "electrically connected." On the other hand, if an element is referred to as "directly connected" to another element, it should be understood that no other element exists in the middle.

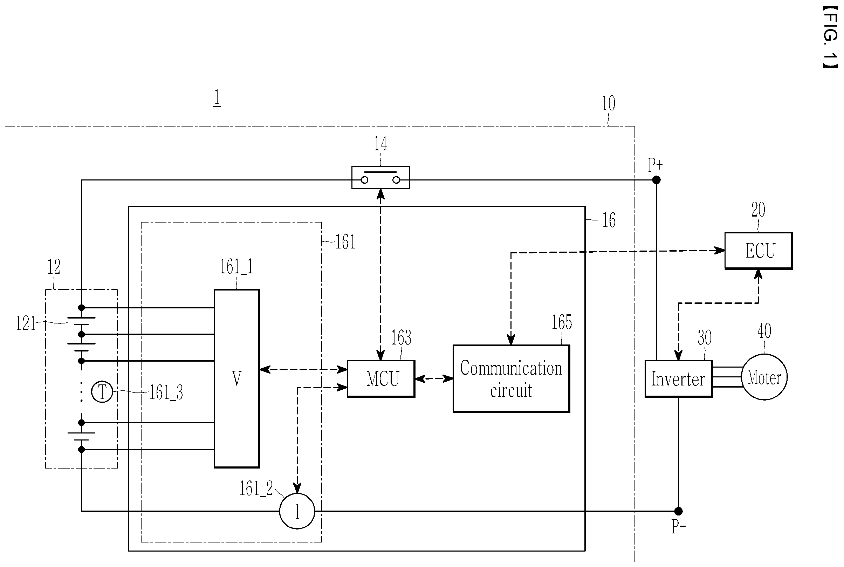

FIG. 1 is a diagram illustrating an example of an electric vehicle according to an embodiment.

Referring to FIG. 1, an electric vehicle 1 may include a battery pack 10, an Electronic Control Unit (ECU) 20, an inverter 30, and an electric motor 40.

The battery pack 10 may store electrical energy to supply the electrical power needed in the electric vehicle 1. The battery pack 10 may be referred to as a battery rack or a battery system depending on the case.

The battery pack 10 may be connected to an external charging device or a load through terminals P+ and P-, and the battery pack 10 may be charged by the charging device, and the battery pack 10 may be discharged by the load.

The ECU 20 may transmit a control command to the battery pack 10 through communication with the battery pack 10, and may receive a response to the control command or information regarding the state of the battery pack 10 from the battery pack 10. The communication between the battery pack 10 and the ECU 20 may be controller are network (CAN) communication. Although one ECU is shown in FIG. 1, in addition to the ECU 20 related to the present disclosure, a plurality of ECUs may be provided within the electric vehicle 1, and each of the plurality of ECUs may be designed to control a corresponding function.

The inverter 30 may be connected between the terminals P+ and P- of the battery pack 10, and may convert direct current power supplied from the battery 12 of the battery pack 10 into alternating current power and supply the alternating current power to the electric motor 40.

The electric motor 40 may be driven according to the alternating current power supplied from the inverter 30 to provide power to the electric vehicle 1. For example, a 3-phase alternating current motor may be used as the electric motor 40. The inverter 30 and the electric motor 40 are examples of various electrical loads within the electric vehicle 1.

When a relay 14 is turned on, the battery 12 may discharge to supply power to the electrical loads 30 and 40, or the battery 12 may be charged by a charging device. When the charging or discharging of the battery is finished, the relay 14 may be turned off.

The battery pack 10 may include a battery 12, a relay 14, and a Battery Management System (BMS) 16.

The battery 12 includes a plurality of battery cells 121 electrically connected to each other in series and/or in parallel. The number of the plurality of battery cells constituting the battery 12 and their connection relationship may be designed according to a voltage and capacity required for the battery 12. For example, the voltage and capacity of the battery 10 required for the electric vehicle 1 may be approximately 400V and 60kWh or more, which may be a high voltage and high capacity. The number of the plurality of battery cells 121 constituting the battery 12 and the connection relationship between the plurality of battery cells 121 may be designed to be approximately 400V and 60kWh or more. Each of the plurality of battery cells 121 may be, for example, a lithium-ion cell.

The relay 14 may provide current paths during charging and discharging of the battery 12. The relay 14 may be connected between the battery 12 and the terminal P+.

The relay 14 may be turned on/off in response to a control signal from the BMS 16. The relay 14 may be a mechanical contactor that is turned on/off by the magnetic force of a coil, or a semiconductor switch such as a Metal Oxide Semiconductor Field Effect Transistor (MOSFET).

The BMS 16 may include a sensing circuit 161 and a Main Control Unit (MCU) 163. The BMS 16 may further include a communication circuit 165.

The sensing circuit 161 may be configured to acquire state parameters of the battery cell. The state parameters of the battery cell may include at least one of voltage, current, temperature, and internal resistance of the battery cell.

The sensing circuit 161 may include a voltage detector 161_1, a current detector 161_2, and a temperature detector 161_3.

The voltage detector 161_1 is connected to a positive terminal and a negative terminal of each of the plurality of battery cells 121 included in the battery 12, measures a cell voltage across each battery cell 121 and may generate a cell voltage signal indicating the measured cell voltage, and transmit the cell voltage signal to the MCU 163.

The current detector 161_2 may be connected in series between a negative electrode of the battery 12 and the terminal P-. Unlike FIG. 1, the current detector 161_2 may be connected in series between a positive electrode of the battery 12 and the terminal P+. The current detector 161_2 measures a charging/discharging current flowing through the battery 12, and may generate a current signal indicating the measured charging/discharging current and transmit the current signal to the MCU 163. Since the plurality of battery cells 121 are connected in series, a common charging/discharging current may flow through the plurality of battery cells 121. The current detector 161_2 may be implemented by one or a combination of two or more of known current detection elements such as a shunt resistor, a hall effect element, and the like.

The temperature detector 161_3 measures a battery temperature, which is the temperature of the battery 12, and may generate a temperature signal indicating the measured battery temperature and transmit the temperature signal to the MCU 163. The temperature detector 161_3 may be disposed inside a case of the battery 12 so that it may measure a temperature close to the actual temperature of the battery 12.

The communication circuit 165 may be configured to support wired communication or wireless communication between the MCU 163 and the ECU 20. The wired communication may be, for example, controller area network (CAN) communication, and the wireless communication may be, for example, Zigbee or Bluetooth communication.

The MCU 163 may receive the cell voltage signal from the voltage detector 161_1, the current signal from the current detector 161_2, and the temperature signal from the temperature detector 161_3. The MCU 163 may convert an analog signal received from each of the voltage detector 161_1, the current detector 161_2, and the temperature detector 161_3 into a digital signal and store the digital signals. The MCU 163 may be implemented in hardware using at least one of application specific integrated circuits (ASICs), digital signal processors (DSPs), digital signal processing devices (DSPDs), programmable logic devices (PLDs), field programmable gate arrays (FPGAs), microprocessors, an application processor (AP), a central processing unit (CPU), a graphic processing unit (GPU), and other electrical units for performing functions.

The MCU 163 monitors the overall state of the battery 12 and the battery cells 121 included in the battery 12 using the information received from each of the voltage detector 161_1, the current detector 161_2, and the temperature detector 161_3, performs a fault diagnosis based on the overall state of the battery 12 and the battery cells 121 included in the battery 12, and may control the charging/discharging of the battery 12.

As one example, the MCU 163 may monitor the cell voltage of each of the plurality of battery cells 121, and the current and temperature of the battery 12, control the charging/discharging of the battery 12, and perform a cell balancing operation.

As another example, the MCU 163 may monitor the temperature of the battery 12 and control the temperature of the battery 12 by cooling, ventilation, changing the charging speed, etc. if necessary, and may cut off the connection between the battery 12 and the load through the relay 14.

According to an embodiment, the MCU 163 may monitor the voltage, current, and temperature of the battery 12 and the voltage, current, and temperature of each of the plurality of battery cells 121, and diagnose whether there is a fault in the battery 12 and each of the plurality of battery cells 121.

When the MCU 163 diagnoses a fault in at least one of the battery 12 and the plurality of battery cells 121, it may transmit a fault code corresponding to the diagnosed fault to the ECU 20.

The ECU 20 may receive the fault code from the BMS 16.

According to some embodiments, a fault diagnosis for at least one of the battery 12 and the plurality of battery cells 121 may also be performed by the ECU 20.

The ECU 20 may have a domain architecture or a zonal architecture, may be connected to the BMS 16, and may receive monitoring information about the battery 12 from the BMS 16. The ECU 20 may diagnose a fault in at least one of the battery 12 and the plurality of battery cells 121 using the monitoring information about the battery 12. In this case, the electric vehicle 1 may be a software defined vehicle (SDV), and the ECU 20 of the electric vehicle 1 may be a high performance computing (HPC).

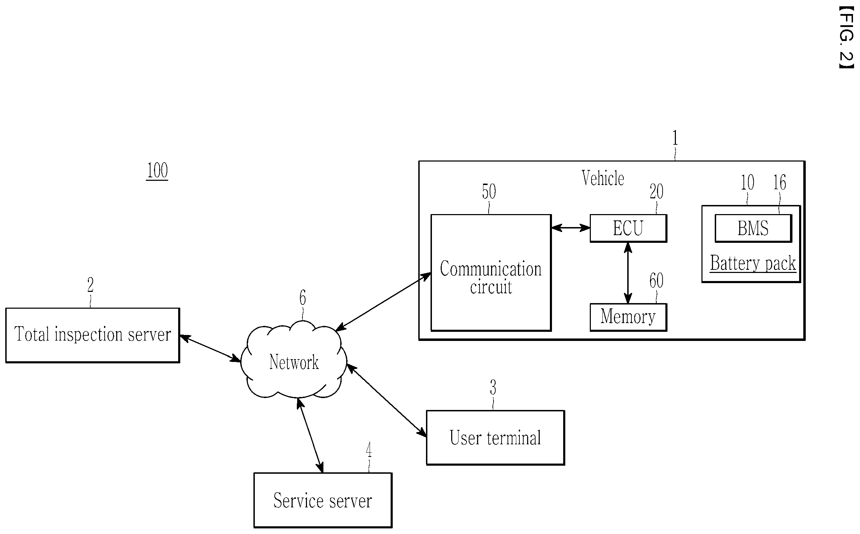

FIG. 2 is a diagram illustrating an example of a system for providing a total inspection according to an embodiment.

Referring to FIG. 2, a system for providing a total inspection 100 may include a total inspection server 2 and a service server 4, and may determine whether to perform a total inspection according to a fault code provided from an electric vehicle 1.

The electric vehicle 1, the total inspection server 2, a user terminal 3, and the service server 4 are connected to each other via a network 6.

The network 6 may be a personal area network (PAN), a local area network (LAN), a campus area network (CAN), a metropolitan area network (MAN), a wide area network (WAN), a broadband network (BBN), a wireless LAN (WLAN), a storage area network (SAN), or a controller area network (CAN), and may also be cellular communication such as long term evolution (LTE), LTE advanced (LTE-A), code-division multiple access (CDMA), wideband code division multiplex access (WCDMA), universal mobile telecommunication system (UMTS), wireless broadband (WiBro), global system for mobile communications (GSM), etc., but is not limited thereto.

The vehicle 1 may include a battery pack (10 in FIG. 1). The vehicle 1 may include an ECU 20, a communication circuit 50, and a memory 60. For convenience, the inverter 30 and the electric motor 40 are omitted.

The communication circuit 50 may provide communication between the ECU 20 and the BMS 16 of the battery pack 10. The communication circuit 50 may provide communication between the ECU 20 and the total inspection server 2.

The communication circuit 50 may receive a fault code from the BMS 16 of the battery pack 10, and may transmit the fault code to the ECU 20. The communication circuit 50 may transmit the fault code to the total inspection server 2 under the control of the ECU 20.

According to some embodiments, the communication circuit 50 may receive monitoring information about the battery 12 from the BMS 16, and may transmit the monitoring information about the battery 12 to the ECU 20. For example, the monitoring information may include the voltage, current, and temperature of the battery 12 and the voltage, current, and temperature of each of the plurality of battery cells 121.

When the ECU 20 receives a fault code from the BMS 16 of the battery pack 10, it may provide information about the fault code in a form recognizable by a user (driver). For example, the ECU 20 may display information about the fault code on a dashboard and an infotainment display in the electric vehicle 1.

The ECU 20 may be configured to transmit the fault code received from the BMS 16 of the battery pack 10 to the total inspection server 2 through the communication circuit 50.

According to some embodiments, the ECU 20 may diagnose a fault in at least one of the battery 12 and the plurality of battery cells 121 using the monitoring information about the battery 12, and may be configured to transmit a fault code corresponding to the diagnosed fault to the total inspection server 2 through the communication circuit 50.

The ECU 20 may store the fault code received from the BMS 16 of the battery pack 10 in a storage device 60.

When the total inspection server 2 receives the fault code, it may determine whether the fault code corresponds to a total inspection code based on pre-stored total inspection code information.

For example, the MCU 163 of the BMS 16 may diagnose a negative tab disconnection and transmit a fault code indicating the negative tab disconnection to the total inspection server 2. The negative tab disconnection may occur due to a manufacturing defect and may cause a fire, so it may be directly related to the driver's safety. Therefore, the fault code indicating the negative tab disconnection may be set as a total inspection code with a high risk level, and may be pre-stored in the total inspection server 2. When the total inspection server 2 receives the fault code indicating the negative tab disconnection from the BMS 16 of the battery pack 10, it may determine that the corresponding fault code is a total inspection code.

When the total inspection server 2 determines that the fault code corresponds to the total inspection code, it may determine target battery packs for total inspection based on the production information of the battery pack 10. The total inspection server 2 may determine a plurality of battery packs having the same production information as the battery pack 10 where the fault code occurred as the target battery packs for total inspection.

The total inspection server 2 may store production information of battery packs. The production information may include manufacturing data of the battery packs, such as production lot information, the manufacturing year of the battery pack, the manufacturing year of the cell, test result information, mass production timing, and manufacturing environment information. The manufacturing environment information may include a manufacturing line, a manufacturing period, and materials used in manufacturing. The total inspection server 2 may store vehicle information necessary for the total inspection of the battery pack from among the data generated during vehicle production. The vehicle information necessary for the total inspection of the battery pack may include production lot information, the manufacturing year of the vehicle, information of the vehicle in which the battery pack is equipped, and mass production result information.

The total inspection server 2 may detect target battery packs for total inspection that have the same manufacturing environment as the battery pack 10 where the fault code occurred, based on the production information of the battery packs and the vehicle information necessary for the total inspection of the battery pack, and may search the vehicles in which the target battery packs for total inspection are equipped.

The total inspection server 2 may transmit a notification to the searched vehicles that they are targets for total inspection, based on the information of the vehicles in which the target battery packs for total inspection are equipped.

The total inspection server 2 may notify the user terminal 3 of the vehicle in which the battery pack 10 where the fault code occurred is equipped and the vehicles in which the target battery packs for total inspection are equipped that they are targets for total inspection.

In some embodiments, the total inspection server 2 may provide information of the nearest service center to the searched vehicles. At this time, if the driver wishes to make a vehicle maintenance reservation, the total inspection server 2 may provide a vehicle maintenance reservation service through the service server 4.

The service server 4 may provide a maintenance reservation for the target vehicles for total inspection upon request from the total inspection server 2, and may provide maintenance information on the target vehicles for total inspection for which maintenance has been completed to the total inspection server 2.

The total inspection server 2 may provide the maintenance information on target vehicles for total inspection for which maintenance has been completed to the drivers of the target vehicles for total inspection.

The user terminal 3 may be a terminal of the owner or driver of the vehicle 1 in which the battery pack 10 is equipped. The user terminal 3 may be a mobile communication terminal including a smart phone.

In some embodiments, an application that may receive the total inspection service of the total inspection server 2 may be installed on the user terminal 3, and the fault code and information on the target vehicles for total inspection may be received through the application.

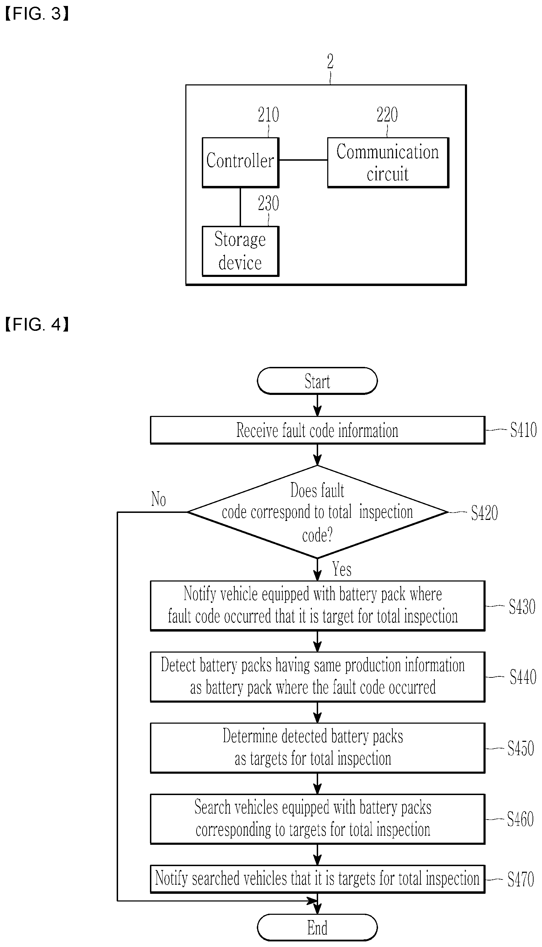

FIG. 3 is a diagram illustrating the total inspection server shown in FIG. 2, and FIG. 4 is a flowchart illustrating a method for providing a total inspection by the total inspection server shown in FIG. 3.

Referring to FIG. 3, the total inspection server 2 may include a controller 210, a communication circuit 220, and a storage device 230.

Referring to FIG. 3 and FIG. 4 together, the controller 210 may receive fault code information of the battery pack 10 through the communication circuit 220 (S410). At this time, the vehicle 1 equipped with the battery pack 10 may be driving. Alternatively, the vehicle 1 equipped with the battery pack 10 may be in production.

The storage device 230 may store vehicle information necessary for the total inspection of the battery packs from among the production information of battery packs and the information of vehicles in which the battery packs are equipped. In addition, the storage device 230 may store total inspection code information. The total inspection code information may include risk level information along with the total inspection code. For example, a certain total inspection code may be set with a high risk level, and a certain total inspection code may be set with a low risk level. The risk level may be set based on the driver's safety.

The controller 210 may check whether the fault code of the battery pack 10 corresponds to a total inspection code by referring to the total inspection code information stored in the storage device 230.

If the fault code of the battery pack 10 corresponds to a total inspection code (S420), the controller 210 may notify the vehicle 1 equipped with the battery pack 10 where the fault code occurred that it is a target for total inspection (S430). The ECU 20 of the vehicle 1 may display that it is a target for total inspection to the driver through a dashboard and an infotainment display.

In some embodiments, the controller 210 may receive the current location information of the vehicle 1 from the vehicle 1, and may provide the location of an adjacent service center to the vehicle 1 based on the current location information of the vehicle 1. The controller 210 may provide the location of a service center capable of emergency maintenance to the vehicle 1 or provide a vehicle maintenance reservation service to the vehicle 1 according to the risk level of the total inspection code.

In addition, the controller 210 may detect battery packs having the same production information as the battery pack 10 where the fault code occurred by referring to the production information of the battery packs stored in the storage device 230 (S440), and may determine the detected battery packs as targets for total inspection (S450).

In some embodiments, the controller 210 may determine battery cells or battery packs including the battery cells having the same lot information as the battery pack 10 where the fault code occurred, or battery packs including the battery cells, as targets for total inspection.

In some embodiments, the controller 210 may determine battery cells or battery packs including the battery cells having the same manufacturing environment as the battery pack 10 where the fault code occurred, as targets for total inspection.

The controller 210 may search vehicles equipped with battery packs corresponding to the targets for total inspection by referring to the vehicle information necessary for the total inspection of the battery packs stored in the storage device 230 (S460).

The controller 210 may notify the searched vehicles that they are targets for total inspection (S470).

In addition, the controller 210 may notify the user terminals of the vehicles equipped with the battery packs corresponding to the targets for total inspection that they are a target for total inspection.

According to some embodiments, the controller 210 may provide the location of adjacent service centers to the searched vehicles based on the location information of the searched vehicles.

According to some other embodiments, the controller 210 may provide differentiated services according to the risk level indicated by the fault code of the battery pack 10. For example, if the risk level indicated by the fault code of the battery pack 10 is low, the controller 210 may provide a vehicle maintenance reservation service to the searched vehicles, and if the risk level indicated by the fault code of the battery pack 10 is high, it may provide information of service centers capable of emergency maintenance or provide an emergency towing service to the searched vehicles.

Such a controller 210 may be implemented in hardware using at least one of an ASIC, a DSP, a DSPD, a PLD, FPGAs, a microprocessor, an AP, a CPU, a GPU, and other electrical units for performing functions.

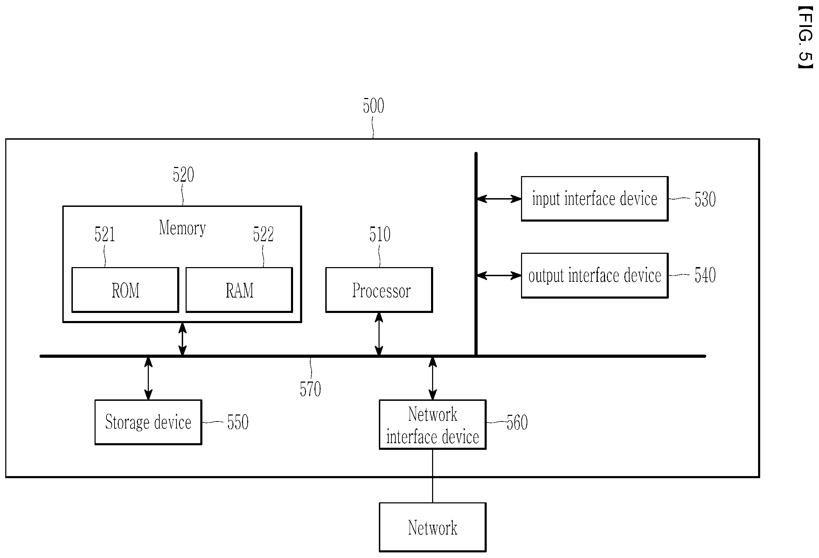

FIG. 5 is a diagram illustrating a system for providing a total inspection according to another embodiment.

Referring to FIG. 5, a system for providing a total inspection 500 may represent a computing device in which the method for providing a total inspection described above is implemented. The system for providing a total inspection 500 may represent the total inspection server 2 shown in FIG. 2.

The system for providing a total inspection 500 may include at least one of a processor 510, a memory 520, an input interface device 530, an output interface device 540, a storage device 550, and a network interface device 560. Each of the components may be connected by a bus 570 and may communicate with each other. In addition, each of the components may be connected through an individual interface or an individual bus centered on the processor 510, rather than the bus 570.

The processor 510 may be implemented in various types such as an AP, a CPU, a GPU, etc., and may be any semiconductor device that executes commands stored in the memory 520 or the storage device 550. The processor 510 may execute program commands stored in at least one of the memory 520 and the storage device 550. The processor 510 may store program commands for implementing at least some functions of the controller 210 shown in FIG. 3 in the memory 520 to perform the operations of the total inspection server 2 described with reference to FIGS. 1 to 4.

The memory 520 and the storage device 550 may include various types of volatile or non-volatile storage media. For example, the memory 520 may include read-only memory (ROM) 521 and random access memory (RAM) 522. In an embodiment, the memory 520 may be located inside or outside the processor 510, and the memory 520 may be connected to the processor 510 through various means already known.

The input interface device 530 may be configured to provide data to the processor 510.

The output interface device 540 may be configured to output data from the processor 510.

The network interface device 560 may transmit or receive signals with an external device through a wired network or a wireless network. The network interface device 560 may include the communication circuit 220 shown in FIG. 3.

At least a part of the method for providing a total inspection according to an embodiment may be implemented as a program or software executed in a computing device, and the program or software may be stored in a computer-readable medium.

In addition, at least a part of the method for providing a total inspection may be implemented as hardware that can be electrically connected to a computing device.

Although the embodiments of the present invention have been described in detail above, the scope of the present invention is not limited thereto, and various modifications and improvements made by those skilled in the art using the basic concept of the present invention defined in the following claims also fall within the scope of the present invention.

## Claims

1. A method for providing a total inspection by a total inspection server connected via a network to a first vehicle equipped with a first battery pack, the method comprising:
receiving, from the first vehicle, a fault code indicating an abnormal state of the first battery pack;
determining whether the fault code corresponds to a total inspection code;
when the fault code corresponds to the total inspection code, determining battery packs having same production information as the first battery pack as targets for total inspection;
searching for vehicles equipped with the battery packs corresponding to the targets for total inspection; and
notifying the searched vehicles and the first vehicle that they are targets for total inspection.

2. The method of claim 1, wherein
the searching for vehicles includes searching for information of vehicles equipped with the battery packs corresponding to the targets for total inspection, based on production information of the battery packs and information of the vehicles in which the battery packs are equipped, the production information and the information of the vehicles being stored in a storage device.

3. The method of claim 1, wherein
the production information includes manufacturing environment information or lot information, and
the manufacturing environment information includes at least one of a manufacturing line, a manufacturing period, and materials used in manufacturing.

4. The method of claim 1, further comprising
transmitting location information of adjacent service centers to each of the searched vehicles and the first vehicle, based on location information of each of the searched vehicles and the first vehicle.

5. The method of claim 1, further comprising
providing differentiated services to the searched vehicles and the first vehicle based on risk level information set for the total inspection code,
wherein the risk level information includes a risk level.

6. The method of claim 5, wherein the providing includes:
when the risk level is a first level, providing a vehicle maintenance reservation service to the searched vehicles and the first vehicle; and
when the risk level is a second level higher than the first level, providing information of service centers capable of emergency maintenance to the searched vehicles and the first vehicle.

7. A system for providing a total inspection, the system comprising:
a communication circuit connected via a network to a first vehicle equipped with a first battery pack, and configured to receive a fault code indicating an abnormal state of the first battery pack from the first vehicle;
a storage device configured to store production information of battery packs, information of vehicles in which the battery packs are equipped, and total inspection code information; and
a controller configured to determine whether the fault code corresponds to a total inspection code based on the total inspection code information, and when the fault code corresponds to the total inspection code, configured to notify vehicles equipped with battery packs having same production information as the first battery pack that they are targets for total inspection.

8. The system of claim 7, wherein
the controller is configured to search among the battery packs for battery packs having the same production information as the first battery pack based on the production information of the battery packs and the information of the vehicles in which the battery packs are equipped, and to search for information of vehicles equipped with the searched battery packs.

9. The system of claim 7, wherein
the production information includes manufacturing environment information or lot information, and
the manufacturing environment information includes at least one of a manufacturing line, a manufacturing period, and materials used in manufacturing.

10. The system of claim 7, wherein
the controller is configured to provide location information of service centers to each of the searched vehicles and the first vehicle through the communication module, based on location information of each of the searched vehicles and the first vehicle.

11. The system of claim 7, wherein
the controller is configured to provide differentiated services to the searched vehicles and the first vehicle based on risk level information set for the total inspection code, and
the risk level information includes a risk level.

12. The system of claim 11, wherein
the controller is configured provide a vehicle maintenance reservation service to the searched vehicles and the first vehicle when the risk level is a first level, and provides information of service centers capable of emergency maintenance to the searched vehicles and the first vehicle when the risk level is a second level higher than the first level.
